# EUROPÄISCHE PATENTSCHRIFT

(11) **EP 2 192 388 B1**
(45) Veröffentlichungstag und Bekanntmachung des Hinweises auf die Patenterteilung: **15.08.2012**
(21) Anmeldenummer: 08020633.7
(22) Anmeldetag: 27.11.2008
(51) Int. Cl.: G01D 5/244

(54) **Einrichtung und Verfahren zur Erkennung einer fehlerhaft ermittelten Lage eines drehbaren Elements eines Inkrementalgebers**
Device and method for detecting an incorrectly calculated position of a turnable element in an incremental transmitter
Dispositif et procédé de reconnaissance d'une position déterminée comme erronée d'un élément rotatif d'un émetteur incrémentiel

(43) Veröffentlichungstag der Anmeldung: 02.06.2010
(73) Patentinhaber: Siemens Aktiengesellschaft, 80333 München (DE)
(72) Erfinder: Olomski, Jürgen, 91074 Herzogenaurach (DE)

(56) Entgegenhaltungen:
- EP-A- 0 575 843
- EP-A- 0 714 171
- DE-A1- 4 230 616
- DE-A1- 19 727 352

## Beschreibung

Die Erfindung betrifft ein Verfahren zur Erkennung einer fehlerhaft ermittelten Lage eines drehbaren Elements eines Inkrementalgebers. Weiterhin betrifft die Erfindung eine Einrichtung.

Bei Maschinen aus der Automatisierungstechnik, wie z.B. Werkzeugmaschinen, Produktionsmaschinen und/oder Roboter werden häufig Absolutwertgeber benötigt, um ein aufwändiges Referenzieren einer vom Geber ermittelten Lage, wie es bei Inkrementalgebern erforderlich ist, nach einem durchgeführten Aus-und Wiedereinschaltvorgang des Antriebssystems der Maschine, zu vermeiden. Absolutwertgeber weisen jedoch gegenüber Inkrementalgebern den Nachteil auf, dass Absolutwertgeber erheblich teuerer sind als Inkrementalgeber.

Weiterhin sind sogenannte Resolver bekannt. Resolver ermitteln die Lage aus einem gemessenen Geberwert, der über eine sogenannte elektrische Resolverperiode die absolute Lage innerhalb der elektrischen Resolverperiode in Form eines Geberwerts ausgibt und einem Umdrehungszähler, der mit jeder elektrischen Periode des Resolvers, z.B. in einer Steuer- und/oder einer Regeleinrichtung zur Steuerung und/oder Regelung der Maschine, inkrementiert wird. Umdrehungszähler und Geberwert werden beim Ausschalten der Steuer- und/oder Regeleinrichtung gespeichert. Nach einem Wiedereinschalten der Steuer- und/oder Regeleinrichtung wird der aktuelle Geberwert des Resolvers, mit dem abgespeicherten Geberwert verglichen. Liegt die Differenz zwischen gespeichertem Geberwert und dem aktuellen Geberwert innerhalb eines schmalen Toleranzbandes kann mit einer entsprechenden Wahrscheinlichkeit davon ausgegangen werden, dass sich der Resolver während des Ausschaltzeitraumes nicht bewegt hat und der Wert des Umdrehungszählers weiterhin gültig ist. Somit kann mit dem neuen Geberwert und dem Wert des Umdrehungszählers wiederum eine Lage ermittelt werden und ein Referenzieren oder eine Justage nach einem Ausschalten der Steuer- und/oder Regeleinrichtung vermieden werden. Resolver sind aber ebenfalls teuerer als Inkrementalgeber.

Insbesondere für einfach aufgebaute Maschinen aus der Automatisierungstechnik werden deshalb häufig zur Messung der Lage von Maschinenelementen Inkrementalgeber eingesetzt, die kostengünstig sind. Bei der Verwendung von Inkrementalgebern kann jedoch bei handelsüblichen Gebersignalauswertungen nach einem Aus- und Wiedereinschaltvorgang des Antriebssystems nicht zuverlässig die Lage ermittelt werden, da im ausgeschalteten Zustand sich der Inkrementalgeber bewegt haben kann und dies nach einem Wiedereinschalten des Antriebssystems nicht erkannt wird. Deshalb muss bei handelsüblichen Maschinen, wenn Inkrementalgeber zur Messung der Lage verwendet werden, nach einem Aus- und Wiedereinschalten des Antriebssystems die Lage des Maschinenelements durch Referenzieren, d.h. durch Verfahren auf eine festgelegte Nullmarke bestimmt werden. Das Referenzieren ist zeitaufwändig und vermindert somit die Produktivität der Maschine.

Es ist Aufgabe der Erfindung eine Erkennung einer fehlerhaft ermittelten Lage eines drehbaren Elements eines Inkrementalgebers zu ermöglichen.

Diese Aufgabe wird gelöst durch eine Einrichtung, wobei die Einrichtung eine Auswerteeinheit zur Ermittelung einer Lage eines drehbaren Elements eines Inkrementalgebers und einen Speicher aufweist, wobei von der Einrichtung ein erstes und ein zweites Markierungsspursignal des Inkrementalgebers einlesbar ist, wobei von der Einrichtung ein erstes binäres, ein zweites binäres und ein drittes binäres Segmentspursignal des Inkrementalgebers einlesbar ist, wobei von der Auswerteinheit aus dem ersten und dem zweiten Markierungsspursignal ein Zählerstand ermittelbar ist, wobei die Auswerteeinheit derart ausgebildet ist, dass die Auswerteeinheit den Zählerstand und die zu dem Zählerstand zugehörigen binären Zustände der Segmentspursignale fortlaufend in dem Speicher abspeichert und nach einem Aus- und Wiedereinschalten der Einrichtung überprüft ob sich der aktuelle binäre Zustand bei mindestens einem der Segmentspursignale von dem zuletzt gespeicherten binären Zustand des betreffenden Segmentspursignals verändert hat und falls dies der Fall ist auf eine fehlerhaft ermittelte Lage erkennt.

Weiterhin wird diese Aufgabe gelöst durch ein Verfahren zur Erkennung einer fehlerhaft ermittelten Lage eines drehbaren Elements eines Inkrementalgebers, wobei von einer Einrichtung ein erstes und ein zweites Markierungsspursignal des Inkrementalgebers einlesen wird, wobei ein erstes binäres, ein zweites binäres und ein drittes binäres Segmentspursignal des Inkrementalgebers von der Einrichtung eingelesen wird, wobei aus dem ersten und dem zweiten Markierungsspursignal ein Zählerstand ermittelt wird, wobei der Zählerstand und die zu dem Zählerstand zugehörigen binären Zustände der Segmentspursignale fortlaufend abspeichert werden und nach einem Aus- und Wiedereinschalten der Einrichtung überprüft wird ob sich der aktuelle binäre Zustand bei mindestens einem der Segmentspursignale von dem zuletzt gespeicherten binären Zustand des betreffenden Segmentspursignals verändert hat, wobei falls dies der Fall ist auf eine fehlerhaft ermittelte Lage erkannt wird.

Vorteilhafte Ausbildungen der Einrichtung ergeben sich analog zur vorteilhaften Ausbildung des Verfahrens und umgekehrt.

Vorteilhafte Ausbildungen der Erfindung ergeben sich aus den abhängigen Ansprüchen.

Es erweist sich als vorteilhaft, wenn die Auswerteeinheit derart ausgebildet ist, dass nach einem Aus- und Wiedereinschalten der Einrichtung die Auswerteeinheit anhand des abgespeicherten Zählerstands eine zur erwartenden Zählerstand ermittelt, bei dem bei mindestens einem der Segmentspursignale eine Änderung seines binären Zustands zu erwarten ist falls sich im ausgeschalteten Zustand der Einrichtung das Element nicht bewegt hat, wobei die Auswerteeinheit den zu erwartenden Zählerstand mit dem tatsächlichen Zählerstand vergleicht, der bei der nächsten Änderung des binären Zustands von einem der Segmentspursignale auftritt und falls die Differenz von zu erwartendem Zählerstand und tatsächlichen Zählerstand eine Grenzwert überschreitet auf eine fehlerhaft ermittelte Lage erkennt. Hierdurch wird ein besonders sicheres Erkennen einer fehlerhaft ermittelten Lage eines drehbaren Elements des Inkrementalgebers ermittelt.

Ferner erweist es sich als vorteilhaft, wenn die Maschine aus der Automatisierungstechnik als Werkzeugmaschine, Produktionsmaschine und/oder als Roboter ausgebildet ist. Eine Ausbildung der Einrichtung als Steuereinrichtung und/oder als Regeleinrichtung zur Steuerung und/oder Regelung einer Maschine aus der Automatisierungstechnik oder als Stromrichtereinrichtung stellen übliche Ausbildungen der Einrichtung dar.

Ferner erweist es sich als vorteilhaft, wenn die Maschine aus der Automatisierungstechnik als Werkzeugmaschine, Produktionsmaschine und/oder als Roboter ausgebildet ist.

Ein Ausführungsbeispiel ist in der Zeichnung dargestellt und wird im Folgenden näher erläutert. Dabei zeigen:
- FIG 1: eine schematisierte Darstellung eines Antriebssystems einer Maschine aus der Automatisierungstechnik,
- FIG 2: eine schematisierte Darstellung der wesentlichen Ele- mente eines Inkrementalgebers und
- FIG 3: die Signalverläufe über eine mechanische Umdrehung des drehbaren Elements.

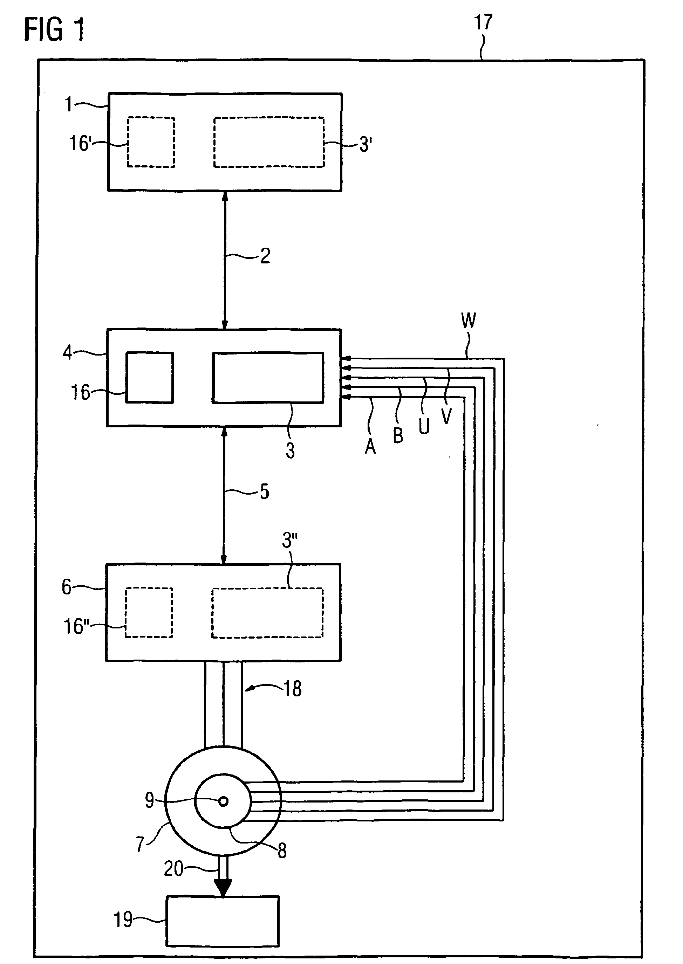

In FIG 1 ist in Form einer schematisierten Darstellung ein Antriebssystem 17 einer Maschine aus der Automatisierungstechnik, wie z.B. einer Werkzeugmaschine, Produktionsmaschine und/oder eines Roboters dargestellt. Eine Steuereinrichtung 1, die zur Steuerung der Bewegung eines Maschinenelements 19, wie z.B. einer Werkzeugeinspannvorrichtung der Maschine dient, ist über eine Verbindung 2 mit einer Regeleinrichtung 4 verbunden. Die Steuereinrichtung 1 erzeugt in einem äquidistanten Zeittakt Regelsollwerte in Form von Lagesollwerten, die an die Regeleinrichtung 4 über die Verbindung 2 übermittelt werden. Die Regeleinrichtung 4 steuert über eine Verbindung 5 einen Stromrichter 6 an, der über Leitungen 18 einen Motor 7 ansteuert, wobei der Motor 7 das Maschinenelement 19 antreibt, was durch einen Pfeil 20 in FIG 1 dargestellt ist. An der Motorwelle des Motors 7 ist ein Inkrementalgeber 8, der eine Geberwelle 9 aufweist, angeordnet. Die Geberwelle 9 ist dabei mit der Motorwelle des Motors 7 fest verbunden. Der Inkrementalgeber 8 erzeugt ausgangsseitig ein erstes Markierungsspursignal A und ein zweites Markierungsspursignal B, die an die Regeleinrichtung 4 übermittelt werden und von ihr eingelesen werden.

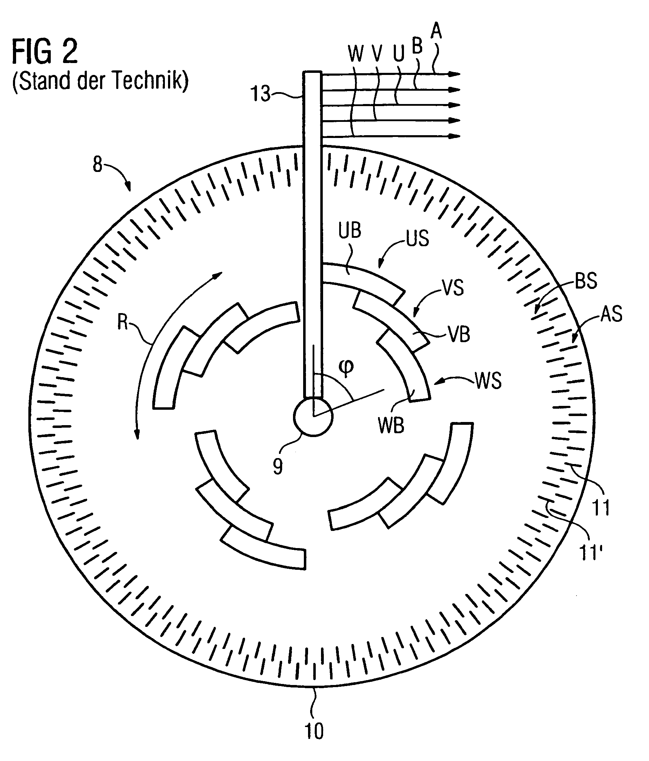

Die Regeleinrichtung 4 weist neben einer Auswerteeinheit 3 einen Speicher 16 auf. Die Auswerteeinheit 3 ermittelt aus dem ersten und dem zweiten Markierungsspursignal A und B die Lage eines drehbaren Elements 10 des Inkrementalgebers 8, wobei das drehbare Element 10 im Rahmen des Ausführungsbeispiels in Form einer Scheibe ausgebildet ist und die Lage in Form eines Drehwinkels ϕ vorliegt (siehe FIG 2). Weiterhin erzeugt der Inkrementalgeber 8 ein erstes binäres Segmentspursignal U und ein zweites binäres Segmentspursignal V und ein drittes binäres Segmentspursignal W, die an die Regeleinrichtung 4 übermittelt werden.

Die Regeleinrichtung 4 liest die beiden Markierungsspursignale A und B und die drei Segmentspursignale U, V und W ein. Entsprechend der von der Auswerteeinheit 3, anhand der beiden Markierungsspursignale A und B ermittelten Lage ϕ des drehbaren Elements 10 des Inkrementalgebers 8 und damit der Lage des Maschinenelements 19 und den von der Steuereinrichtung 1 erzeugten Lagesollwerten wird der Stromrichter 6 entsprechend von der Regeleinrichtung 4 angesteuert.

Es sei an dieser Stelle angemerkt, dass die Regeleinrichtung 4, der Stromrichter 6 und der Motor 7, sowie der Inkrementalgeber 8 bei einer handelsüblichen Maschine für jede Bewegungsrichtung in der das Maschinenelement 19 bewegt werden soll, in der Regel jeweils einmal vorhanden ist, so dass allgemein die Regeleinrichtung 4, der Stromrichters 6, und der Motor 7 sowie der Inkrementalgeber 8 bei einer Maschine mehrfach vorhanden sind, wobei die Steuereinrichtung 1 für jede Regeleinrichtung entsprechende Lagesollwerte erzeugt. Der Übersichtlichkeit halber und da für das Verständnis der Erfindung unwesentlich ist in FIG 1 nur eine Regeleinrichtung 4, ein Stromrichter 6 und ein Motor 7 sowie ein Inkrementalgeber 8 dargestellt. Die Regeleinrichtung 4, der Stromrichter 6 und der Motor 7, sowie der Inkrementalgeber 8 bilden einen sogenannten Antriebsstrang. Es sei an dieser Stelle angemerkt, dass die Steuereinrichtung 1, die Regeleinrichtung 4 und der Stromrichter 6 noch mehr Elemente aufweisen, die jedoch der Übersichtlichkeit halber und da für das Verständnis der Erfindung unwesentlich, in FIG 1 nicht dargestellt sind.

In FIG 2 sind die zum Verständnis der Erfindung relevanten Elemente eines handelsüblichen Inkrementalgebers 8 in Form einer schematisierten Darstellung dargestellt. Der Inkrementalgeber 8 weist eine Geberwelle 9 auf, die im eingebauten Zustand z.B. mit der Motorwelle des Motors 7, die z.B. über ein Getriebe das Maschinenelement 19 antreibt, fest verbunden. Die Geberwelle 9 ist mit einem drehbaren Element 10, das im Rahmen des Ausführungsbeispiels in Form eine Scheibe vorliegt, des Inkrementalgebers 8 fest verbunden. Auf dem drehbaren Element 10 sind kreisförmig angeordnete Markierungen angebracht, wobei der Übersichtlichkeit halber nur eine Markierung 11 mit einem Bezugszeichen versehen ist. Die kreisförmig angeordneten Markierungen bilden eine sogenannte A-Spur AS des Inkrementalgebers 8. Die Markierungen sind dabei zueinander äquidistant beabstandet kreisförmig längs des Umfangs des drehbaren Elements 10 angeordnet. Weiterhin weist das drehbare Element 10 weitere äquidistant zueinander beabstandet kreisförmig angeordnete Markierungen auf, wobei von den weiteren Markierungen der Übersichtlichkeit halber nur eine weitere Markierung 11' mit einem Bezugszeichen versehen ist. Die weiteren Markierungen bieten eine sogenannte B-Spur BS des Inkrementalgebers 8. Das drehbare Element 10 bildet zusammen mit den am drehbaren Element 10 angeordneten Markierungen und den weiteren Markierungen eine Maßverkörperung. Die Markierungen der B-Spur BS sind gegenüber den Markierungen der A-Spur AS versetzt angeordnet.

Weiterhin weist der Inkrementalgeber 8 eine ortsfest angeordnete Erfassungseinrichtung 13 auf, wobei die Erfassungseinrichtung 13 wenn sich das Element 10 dreht, die einzelnen Markierungen der A-Spur AS erfasst und jedes Mal, wenn sie eine Markierung erfasst, d.h. wenn die betreffende Markierung unter ihr durchläuft, vorzugsweise einen Impuls erzeugt. Solchermaßen erzeugt die Erfassungseinrichtung 1 ein erstes vorzugsweise pulsförmiges Markierungsspursignal A. In analoger Weise erzeugt die Erfassungseinrichtung 13 ein zweites vorzugsweise pulsförmiges Markierungsspursignal B, wobei jedes Mal, wenn die Erfassungseinrichtung 13 eine Markierung der B-Spur BS erfasst, vorzugsweise ein entsprechender Impuls erzeugt wird.

Im Rahmen des Ausführungsbeispiels weist die A-Spur AS und die B-Spur BS jeweils 2400 Markierungen auf, d.h. bei ca. einer vollständigen Umdrehung des drehbaren Elements 10 wird ein erstes Markierungsspursignal A und ein zweites Markierungsspursignal, die jeweilig aus 2400 Impulsen bestehen, erzeugt. Dadurch, dass die Markierungen der A-Spur AS und der B-Spur BS längs der Drehrichtung R versetzt angeordnet sind, kann die Auswerteeinheit 3 (siehe FIG 1), bestimmen, in welcher Richtung sich das drehbare Element 10 gerade dreht, d.h. gegen den Uhrzeigersinn oder mit dem Uhrzeigersinn, da die Impulse des ersten und des zweiten Markierungspulssignals zeitlich zueinander versetzt erzeugt werden.

Weiterhin weist der Inkrementalgeber 8 drei weitere kreisförmig auf dem Drehelement 10 angeordnete Spuren auf, die nachfolgend als Segmentspuren US, VS und WS bezeichnet werden. Die erste Segmentspur US besteht im Rahmen des Ausführungsbeispiels aus vier kreisförmig angeordneten Segmentspurbereichen, wobei der Übersichtlichkeit halber nur ein Segmentspurbereich UB der ersten Segmentspur US mit einem Bezugszeichen versehen ist. Entsprechend besteht die zweite Segmentspur VS im Rahmen des Ausführungsbeispiels aus vier kreisförmig angeordneten Segmentspurbereichen, wobei der Übersichtlichkeit halber nur ein Segmentspurbereich VB der zweiten Segmentspur VS mit einem Bezugszeichen versehen ist. Entsprechend besteht die dritte Segmentspur WS im Rahmen des Ausführungsbeispiels aus vier kreisförmig angeordneten Segmentspurbereichen, wobei der Übersichtlichkeit halber nur ein Segmentspurbereich WB der dritten Segmentspur WS mit einem Bezugszeichen versehen ist.

Die einzelnen Segmentspurbereiche der drei Segmentspuren sind dabei, wie in FIG 2 dargestellt, in Drehrichtung R versetzt angeordnet. Wenn ein Segmentspurbereich unter der Erfassungseinrichtung 13 beim Drehen des Drehelements 10 hindurchläuft, wird dieser von der Erfassungseinrichtung 13 erfasst und ein entsprechend zugehöriges Segmentspursignal auf einen Spannungs-High-Pegel, d.h. einen logischen Zustand von "1" während des Erfassungszeitraums gesetzt und danach wieder auf einen logischen Zustand von "0" (Spannungs-Low-Pegel) gesetzt. So wird z.B. beim Erfassen des Segmentspurbereichs US das zugehörige Segmentspursignal U auf einen logischen Zustand von "1" während des Erfassungszeitraums gesetzt und danach wieder auf einen logischen Zustand von "0" gesetzt. Entsprechend wird beim Erfassen des Segmentspurbereichs VS das zugehörige Segmentspursignal B auf einen logischen Zustand von "1" während des Erfassungszeitraums gesetzt und danach wieder auf einen logischen Zustand von "0" gesetzt und beim Erfassen des Segmentspurbereichs WS das zugehörige Segmentspursignal W auf einen logischen Zustand von "1" während des Erfassungszeitraums gesetzt und danach wieder auf einen logisehen Zustand von "0" gesetzt. Die drei binären Spursignale weisen somit einen binären Zustand von "1" oder "0" auf.

Bei handelsüblichen Inkrementalgebern 8 dienen die Segmentspursignale normalerweise dazu, eine einfache Ansteuerung des Stromrichters 6 zu ermöglichen, damit ein anzusteuernder Motor entsprechend angesteuert werden kann. Bei einem typischen Motor, z.B. mit einer Polpaarzahl von 4 erstreckt sich ein Segmentspurbereich z.B. über einen Winkel ϕ von 45°. Die Segmentspurbereiche wiederholen sich periodisch entlang der jeweiligen Segmentspur, wobei im Rahmen des Ausführungsbeispiels sich die Segmentspurbereiche und damit sich auch die Segmentspursignale U, V, und W innerhalb einer Drehung vierfach periodisch wiederholen.

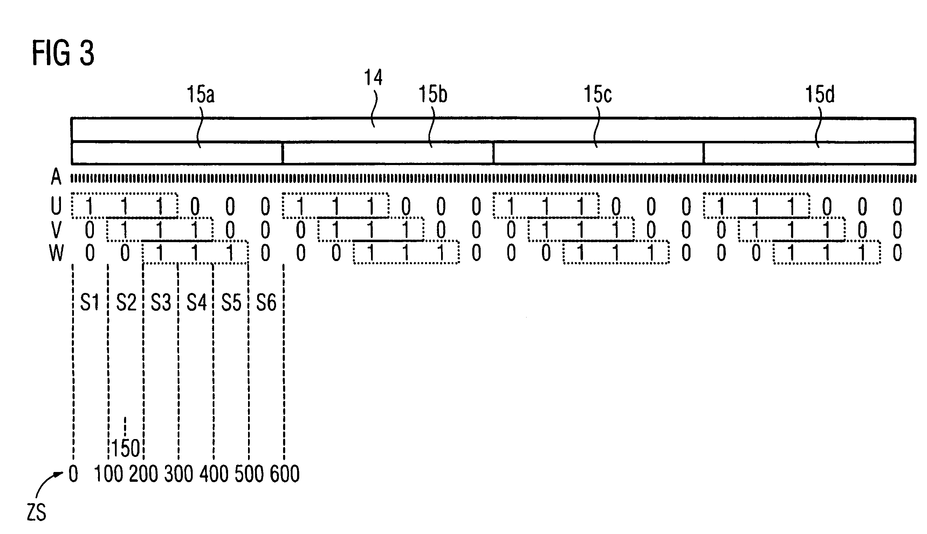

In FIG 3 sind die entstehenden Signale, die über eine mechanische Periode, d.h. einen kompletten Umlauf des Drehelements 10 vom Inkrementalgeber erzeugt werden, dargestellt. Pro mechanischer Periode 14, d.h. pro vollständiger Umdrehung des Drehelements 10 weist das Markierungsspursignal A entsprechend der Anzahl der Markierungen, d.h. im Rahmen des Ausführungsbeispiels 2400 Impulse auf, wobei wie schon gesagt bei jeder durchlaufenden Markierung ein Impuls erzeugt wird. Da das zweite Markierungsspursignal B lediglich dazu dient, die die Richtung der Drehrichtung R des Elements 10 festzustellen, ist dieses der Übersichtlichkeit halber in FIG 3 nicht dargestellt. Die binären Zustände der Segmentspursignale U, V und W ist in FIG 3 über der mechanischen Periode 14, d.h. über einer vollständigen Umdrehung des Drehelements 10 aufgetragen. Entsprechend der Anzahl der Segmentspurbereiche pro Segmentspur wiederholen sich periodisch die Segmentspursignale U, V und W, so dass im Rahmen des Ausführungsbeispiels die Verläufe der Segmentspursignale vier sogenannte elektrische Perioden 15a, 15b, 15c und 15d aufweisen, bei denen jeweils eine Wiederholung der Signalfolge der Segmentspursignale auftritt. Innerhalb einer elektrischen Periode ergeben sich so aus den jeweiligen unterschiedlichen binären Zuständen der Segmentspursignale U, V und W im Rahmen des Ausführungsbeispiels sechs Segmente S1 bis S6, die sich jeweils über 100 Markierungen, d.h. über 100 Impulse des Markierungsspursignals A erstrecken.

In FIG 3 sind die Segmente S1 bis S6 der Übersichtlichkeit halber nur für die elektrische Periode 15a dargestellt. Die zugehörigen Segmentspurbereiche sind für jedes Segmentspursignal punktiert gezeichnet angedeutet dargestellt.

Erfindungsgemäß werden die bei handelsüblichen Inkrementalgebern häufig vorhandenen Segmentspursignale dazu benutzt, eine fehlerhaft ermittelte Lage, die im Rahmen des Ausführungsbeispiels im Form des Drehwinkels ϕ vorliegt, des drehbaren Elements 10 des Inkrementalgebers 8 zu erkennen.

Die Regeleinrichtung 4, weist wie schon gesagt, eine Auswerteeinheit 3, die die Erkennung einer fehlerhaft ermittelten Lage ϕ des drehbaren Elements 10 des Inkrementalgebers 8 ermöglicht und einen Speicher 16 auf. Von der Regeleinrichtung 4 wird hierzu, wie schon gesagt, das erste Markierungsspursignal A und das zweite Markierungsspursignal B des Inkrementalgebers 8 eingelesen und aus dem ersten und dem zweiten Markierungsspursignal ein Zählerstand ermittelt, der die Anzahl der von der Erfassungseinrichtung 13 des Inkrementalgebers 8 bei einer Drehbewegung des drehbaren Elements 12 erfassten Markierungen des Inkrementalgebers unter Berücksichtigung der Richtung der Drehrichtung R des Elements 10 angibt. Wenn sich z.B. das drehbare Elemente 10 eine Drehbewegung gegen den Uhrzeigersinn ausführt, wird der Zählerstand bei jeder von der Erfassungseinrichtung 13 erfassten Markierung der A-Spur AS um einen Wert von 1 erhöht und falls sich das Element 10 mit dem Uhrzeigersinn bewegt, der Zählerstands um einen Wert von 1 erniedrigt. Die Auswerteeinheit weist hierzu einen entsprechenden Zähler auf.

Weiterhin werden von der Regeleinrichtung 4 das erste binäre Segmentspursignal U, das zweite binäre Segmentspursignal V und das dritte binäre Segmentspursignal W eingelesen.

Erfindungsgemäß werden nun der Zählerstand und die zu dem Zählerstand zugehörigen binären Zustände der Segmentspursignale fortlaufend in dem Speicher 16 der Regeleinrichtung 4 gespeichert. In FIG 3 ist der Wert des Zählerstands ZS der am Ende der Segmente S1, S2, S3, S4, S5 und S6 erreicht ist, unter der Annahme, dass der Zählerstand zu Beginn der mechanischen Periode 14 auf Null gesetzt ist, dargestellt. Jedes der Segmente S1 bis S6 erstreckt sich jeweils über 100 Markierungen, d.h. 100 Impulse des Markierungsspursignals A. Wenn z.B., wie in FIG 3 dargestellt, der Zählerstand gerade einen Wert von 150 aufweist und somit sich gerade in Segment S2 befindet, weisen die zu dem Zählerstand zugehörigen binären Zustände der Segmentspursignale U, V und W, die zu dem Segment S2 zugehörigen binären Zustände auf, d.h. in diesem Fall weist das erste Segmentspursignal U einen binären Zustand von "1" und das zweite Segmentspursignal V einen binären Zustand von "1" und das dritte Segmentspursignal W einen binären Zustand von "0" auf. Zum Zählerstand 150 werden somit die zugehörigen binären Zustände "1", "1", "0" gespeichert. Die Speicherung erfolgt dabei fortlaufend, d.h. zu jedem Zählerstand werden die zum Zählerstand zugehörigen binären Zustände der Segmentspursignale fortlaufend in dem Speicher 16 abgespeichert.

Wird nun z.B. die Regeleinrichtung 4 ausgeschalten, weil die Maschine z.B. vorübergehend nicht mehr benutzt wird, so ist nach einem Wiedereinschalten der Regeleinrichtung nicht mehr sichergestellt, dass die ermittelte Lage noch mit der tatsächlichen Lage des drehbaren Elements 10 übereinstimmt, da dieses zwischenzeitlich im ausgeschalteten Zustand der Regeleinrichtung 4 weitergedreht worden ist und sich somit die Lage ϕ des drehbaren Elements 10 verändert hat ohne dass der Zählerstand sich verändert hat. Erfindungsgemäß wird deshalb nach einem Aus- und Wiedereinschalten der Regeleinrichtung 4 überprüft, ob sich der aktuelle binäre Zustand bei mindestens einem der Segmentspursignale von dem zuletzt gespeicherten binären Zustand des betreffenden Segmentspursignals verändert hat. Falls dies der Fall ist, wird auf eine fehlerhaft ermittelte Lage ϕ erkannt. Wenn z.B. im ausgeschalteten Zustand das Drehelement um 100 Markierungen gegen die Uhrzeigerrichtung weitergedreht wurde, dann ändert sich, z.B. wenn unmittelbar vor dem Ausschalten der Zählerstand 150 war, das Segmentspursignal W vom binären Zustand "0" auf dem binären Zustand "1", entsprechend dem Segmentwechsel von S2 nach S3. Somit stimmt der aktuelle binäre Zustand des Segmentspursignal W nicht mehr mit dem zuletzt gespeicherten binären Zustand von "0" überein und es wird auf eine fehlerhaft ermittelte Lage ϕ erkannt.

Diese Erkennung einer fehlerhaft ermittelten Lage weist noch den Nachteil auf, dass unter Umständen nicht jede fehlerhafte Lage erkannt werden kann. Wenn die Lageänderung im ausgeschalteten Zustand nur über wenige Markierungen verlaufen ist, dann kann es passieren, dass kein Segmentwechsel durch die Lageänderung bedingt ist und somit die fehlerhafte Lage nicht erkannt werden kann. Weiterhin kann es auch passieren, dass die Lageänderung im ausgeschalteten Zustand genau so erfolgt, dass nach dem Wiedereinschalten, da sich die einzelnen Segmentspursignale periodisch wiederholen, die Segmentspursignale die gleichen binären Zustände aufweisen, wie vor dem Abspeichern, obwohl das drehbare Element 10 weitergedreht worden ist.

Im Rahmen einer vorteilhaften Ausführungsform der Erfindung wird deshalb nach einem Aus- und Wiedereinschalten der Regeleinrichtung von der Auswerteeinheit anhand des abgespeicherten Zählerstands eine zu erwartenden Zählerstand ermittelt, bei dem bei mindestens einem der Segmentspursignale eine Änderung seines binären Zustands zu erwarten ist, falls sich im ausgeschalteten Zustand der Regeleinrichtung 4 das drehbare Element 10 nicht bewegt hat, wobei die Auswerteeinheit 3 den zu erwartenden Zählerstand mit dem tatsächlichen Zählerstand vergleicht, der bei der nächsten Änderung des binären Zustands von einem der Segmentspursignale auftritt und falls die Differenz von zu erwartenden Zählerstand und tatsächlichen Zählerstand einen Grenzwert überschreitet, auf eine fehlerhaft ermittelte Lage erkennt. Wenn z.B. der unmittelbar vor dem Ausschalten zuletzt gespeicherte Zählerstand 150 beträgt, dann ermittelt die Auswerteeinheit einen zu erwartenden Zählerstand von 200, bei dem unter der Annahme das die Drehung des drehbaren Elements 10 gegen den Uhrzeigersinn erfolgt, der binäre Zustand des Segmentspursignals W von "0" auf "1" wechseln muss. Falls nun nachfolgend im eingeschalteten Zustand, der Regeleinrichtung 4 bei einer nachfolgenden gegen den Urzeigersinn verlaufenden Drehbewegung des drehbaren Elements 10 zum Zeitpunkt der Änderung des Segmentspursignals W von "0" nach "1" der tatsächliche Zählerstand von dem Wert 200 abweicht und die Differenz von zu erwartendem Zählerstand und tatsächlichen Zählerstand eine Grenzwert überschreitet, wird auf eine fehlerhaft ermittelte Lage erkannt. Über die Wahl der Höhe des Grenzwertes kann die Empfindlichkeit der Fehlererkennung vorgegeben werden. In analoger weise wird bei einer mit dem Uhrzeigersinn verlaufenden Drehbewegung des drehbaren Elements 10 verfahren, wobei ein bei einer mit dem Uhrzeigersinn verlaufenden Drehbewegung entsprechender zu erwartender Zählerstand ermittelt wird.

Es sei an dieser Stelle angemerkt, dass die Auswerteeinheit 3 und der Speicher 16 auch Bestandteil der Steuereinrichtung 1 oder Bestandteil der Stromrichtereinrichtung 6 sein können. Die entsprechenden Auswerteeinheiten sind in der FIG 1 entsprechend gestrichelt gezeichnet und mit dem Bezugszeichen 3' und 3" versehen dargestellt und die entsprechenden Speicher sind in FIG 1 gestrichelt gezeichnet mit dem Bezugszeichen 16' und 16" versehen dargestellt. Die Steuereinrichtung 1 und die Regeleinrichtung 4 können aber auch in Form einer einzelnen baulichen Einrichtung vorliegen. Weiterhin kann die Stromrichtereinrichtung 6 auch in die Regeleinrichtung 4 integriert sein. Insofern kann die erfindungsgemäße Einrichtung als Steuereinrichtung und/oder als Regeleinrichtung zur Steuerung und/oder Regelung einer Maschine aus der Automatisierungstechnik oder als Stromrichtereinrichtung ausgebildet sein. Die Maschine aus der Automatisierungstechnik kann dabei z.B. als Werkzeugmaschine, Produktionsmaschine und/oder als Roboter ausgebildet sein. Wenn die Auswerteeinheit und der Speicher nicht in der Regeleinrichtung sondern in der Steuereinrichtung oder der Stromrichtereinrichtung realisiert sind, dann können die Markierungsspursignale und die Segmentspursignale über die Verbindung 2 oder die Verbindung 5 an die Steuereinrichtung 1 oder die Stromrichtereinrichtung 6 übermittelt werden und von der betreffenden Einrichtung eingelesen werden oder aber die Markierungsspursignale und die Segmentspursignale werden direkt von der Steuereinrichtung 1 oder die Stromrichtereinrichtung 6 eingelesen.

Weiterhin können z.B. aber auch die Markierungsspursignale und die Segmentspursignale vom Inkrementalgeber 8 an die Stromrichtereinrichtung 6 übermittelt werden und über die Verbindung 5 an die Regeleinrichtung 4 übermittelt werden und dort von der Auswerteeinheit 3 ausgewertet werden oder aber falls die Auswerteeinheit innerhalb der Stromrichtereinheit 6 realisiert ist (Bezugszeichen 3") können die Signale vom Inkrementalgeber 8 auch direkt von der Stromrichtereinrichtung 6 eingelesen werden.

Weiterhin sei an dieser Stelle angemerkt, dass die Auswerteeinheit z.B. in Form von Software, welche von einem der betreffenden Einrichtung zugeordneten Prozessor ausgeführt wird, ausgebildet sein kann. Weiterhin sei an dieser Stelle angemerkt, dass aber Teile der Auswerteeinheit auch in Form von Hardware realisiert sein können und andere Teile der Auswerteeinheit in Form von Software, welche von einem der betreffenden Einrichtung zugeordneten Prozessor ausgeführt wird, ausgebildet sein können oder die Auswerteeinheit auch vollständig in Form von Hardware ausgebildet sein kann.

Es sein weiterhin an dieser Stelle angemerkt, dass zur Erhöhung der Auflösung der ermittelten Lage das erste und das zweite Markierungsspursignal auch derart ausgewertet werden können, dass bei jedem Flankenwechsel der Markierungsspursignale, der Zählerstand je nach zeitlicher Abfolge der Flankenwechsel der beiden Markierungsspursignale, um einen Wert von 1 erhöht oder erniedrigt wird. Selbstverständlich kann die Erfindung auch bei einer solchen Auswertung der Markierungsspursignale verwendet werden.

## Patentansprüche

1. Einrichtung, wobei die Einrichtung (1,4,6) eine Auswerteeinheit (3,3',3 ") zur Ermittelung einer Lage (ϕ) eines drehbaren Elements (10) eines Inkrementalgebers (8) und einen Speicher (16,16',16") aufweist, wobei von der Einrichtung (1,4,6) ein erstes und ein zweites Markierungsspursignal (A,B) des Inkrementalgebers (8) einlesbar ist, wobei von der Einrichtung (1,4,6) ein erstes binäres, ein zweites binäres und ein drittes binäres Segmentspursignal (U,V,W) des Inkrementalgebers (8) einlesbar ist, wobei von der Auswerteinheit (3,3',3") aus dem ersten und dem zweiten Markierungsspursignal (A,B) ein Zählerstand ermittelbar ist, wobei die Auswerteeinheit (3,3',3 ") derart ausgebildet ist, dass die Auswerteeinheit (3,3',3") den Zählerstand und die zu dem Zählerstand zugehörigen binären Zustände der Segmentspursignale (U,V,W) fortlaufend in dem Speicher abspeichert und nach einem Aus- und Wiedereinschalten der Einrichtung (1,4,6) überprüft ob sich der aktuelle binäre Zustand bei mindestens einem der Segmentspursignale (U,V,W) von dem zuletzt gespeicherten binären Zustand des betreffenden Segmentspursignals verändert hat und falls dies der Fall ist auf eine fehlerhaft ermittelte Lage (ϕ) erkennt.

2. Einrichtung nach Anspruch 1, **dadurch gekennzeichnet, dass** die Auswerteeinheit (3,3', 3") derart ausgebildet ist, dass nach einem Aus- und Wiedereinschalten der Einrichtung (1,4,6) die Auswerteeinheit (3,3',3") anhand des abgespeicherten Zählerstands eine zur erwartenden Zählerstand ermittelt, bei dem bei mindestens einem der Segmentspursignale (U,V,W) eine Änderung seines binären Zustands zu erwarten ist falls sich im ausgeschalteten Zustand der Einrichtung (1,4,6) das Element (10) nicht bewegt hat, wobei die Auswerteeinheit (3,3',3") den zu erwartenden Zählerstand mit dem tatsächlichen Zählerstand vergleicht, der bei der nächsten Änderung des binären Zustands von einem der Segmentspursignale (U,V,W) auftritt und falls die Differenz von zu erwartendem Zählerstand und tatsächlichen Zählerstand eine Grenzwert überschreitet auf eine fehlerhaft ermittelte Lage (ϕ) erkennt.

3. Einrichtung nach einem der vorhergehenden Ansprüche, **dadurch gekennzeichnet, dass** die Einrichtung (1,4,6) als Steuereinrichtung (1) und/oder als Regeleinrichtung (4) zur Steuerung und/oder Regelung einer Maschine aus der Automatisierungstechnik oder als Stromrichtereinrichtung (6) ausgebildet ist.

4. Einrichtung nach Anspruch 3, **dadurch gekennzeichnet, dass** die Maschine aus der Automatisierungstechnik als Werkzeugmaschine, Produktionsmaschine und/oder als Roboter ausgebildet ist.

5. Verfahren zur Erkennung einer fehlerhaft ermittelten Lage (ϕ) eines drehbaren Elements (10) eines Inkrementalgebers (8), wobei von einer Einrichtung (1,4,6) ein erstes und ein zweites Markierungsspursignal (A,B) des Inkrementalgebers einlesen wird, wobei ein erstes binäres, ein zweites binäres und ein drittes binäres Segmentspursignal (U,V,W) des Inkrementalgebers von der Einrichtung (1,4,6) eingelesen wird, wobei aus dem ersten und dem zweiten Markierungsspursignal ein Zählerstand ermittelt wird, wobei der Zählerstand und die zu dem Zählerstand zugehörigen binären Zustände der Segmentspursignale (U,V,W) fortlaufend abspeichert werden und nach einem Aus- und Wiedereinschalten der Einrichtung (1,4,6) überprüft wird ob sich der aktuelle binäre Zustand bei mindestens einem der Segmentspursignale (U,V,W) von dem zuletzt gespeicherten binären Zustand des betreffenden Segmentspursignals verändert hat, wobei falls dies der Fall ist auf eine fehlerhaft ermittelte Lage (ϕ) erkannt wird.

## Claims

1. Device, wherein the device (1, 4, 6) has an evaluation unit (3, 3', 3") for determining a position (ϕ) of a rotatable element (10) of an incremental transmitter (8) and a memory (16, 16', 16"), wherein a first and a second marking trace signal (A, B) of the incremental transmitter (8) can be read in by the device (1, 4, 6), wherein a first binary, a second binary and a third binary segment trace signal (U, V, W) of the incremental transmitter (8) can be read in by the device (1, 4, 6), wherein a meter reading can be determined by the evaluation unit (3, 3', 3") from the first and the second marking trace signal (A, B), wherein the evaluation unit (3, 3', 3") is designed such that the evaluation unit (3, 3', 3") continuously saves the meter reading and the binary statuses of the segment trace signals (U, V, W) pertaining to the meter reading in the memory and after a deactivation and reactivation of the device (1, 4, 6) checks whether the current binary status has changed from the last saved binary status of the relevant segment trace signal in the case of at least one of the segment trace signals (U, V, W) and if this is the case identifies an incorrectly determined position (ϕ).

2. Device according to claim 1, **characterised in that** the evaluation unit (3, 3', 3") is designed such that after a deactivation and reactivation of the device (1, 4, 6) the evaluation unit (3, 3', 3") determines an expected meter reading on the basis of the saved meter reading, wherein a change in its binary status is to be expected in the case of at least one of the segment trace signals (U, V, W) if in the deactivated status of the device (1, 4, 6) the element (10) has not moved, wherein the evaluation unit (3, 3', 3") compares the expected meter reading with the actual meter reading which occurs during the next change in the binary status of one of the segment trace signals (U, V, W) and if the difference between an expected meter reading and an actual meter reading exceeds a limit value identifies an incorrectly determined position (ϕ).

3. Device according to one of the preceding claims, **characterised in that** the device (1, 4, 6) is designed as a control device (1) and/or as a regulation device (4) for controlling and/or regulating an automation technology machine, or as a power converter device (6).

4. Device according to claim 3, **characterised in that** the automation technology machine is designed as a machine tool, production machine and/or as a robot.

5. Method for identifying an incorrectly determined position (ϕ) of a rotatable element (10) of an incremental transmitter (8), wherein a first and a second marking trace signal (A, B) of the incremental transmitter (8) are read in by a device (1, 4, 6), wherein a first binary, a second binary and a third binary segment trace signal (U, V, W) of the incremental transmitter (8) are read in by the device (1, 4, 6), wherein a meter reading is determined from the first and the second marking trace signal, wherein the meter reading and the binary statuses of the segment trace signals (U, V, W) pertaining to the meter reading are continuously saved and after a deactivation and reactivation of the device (1, 4, 6) a check is performed to see whether the current binary status has changed from the last saved binary status of the relevant segment trace signal in the case of at least one of the segment trace signals (U, V, W), wherein if this is the case an incorrectly determined position (ϕ) is identified.

## Revendications

1. Dispositif, dans lequel le dispositif ( 1, 4, 6 ) comporte une unité ( 3, 3', 3" ) d'exploitation pour la détermination d'une position ( ϕ ) d'un élément ( 10 ) tournant d'un émetteur ( 8 ) incrémentiel et une mémoire ( 16, 16', 16" ), dans lequel un premier et un deuxième signal ( A, B ) de marque de repérage de l'émetteur ( 8 ) incrémentiel peuvent être lus par le dispositif ( 10 ) dans lequel un premier, un deuxième et un troisième signal ( U, V, W ) binaire de marque de segment de l'émetteur ( 8 ) incrémentiel peuvent être lus par le dispositif ( 1, 4, 6 ), dans lequel à partir du premier et du deuxième signal ( AB ) de marque de repérage un état du compteur peut être déterminé par l'unité ( 3, 3', 3" ) d'exploitation, dans lequel l'unité ( 3, 3', 3" ) d'exploitation est telle que l'unité ( 3, 3', 3" ) d'exploitation mémorise en continu dans la mémoire l'état du compteur et les états binaires, associés à l'état du compteur, des signaux ( U, V, W ) de marque de segment et, après un débranchement et un rebranchement du dispositif ( 1, 4, 6 ), contrôle si l'état binaire présent s'est, pour au moins l'un des signaux ( U, V, W ) de marque de segment, modifié par l'état binaire mémorisé en dernier du signal de marque de segment concerné et, si c'est le cas, détecte une position ( ϕ ) déterminée d'une façon erronée.

2. Dispositif suivant la revendication 1, **caractérisé en ce que** l'unité ( 3, 3', 3" ) d'exploitation est telle qu'après un débranchement et rebranchement du dispositif ( 1, 4, 6 ) l'unité ( 3, 3', 3" ) d'exploitation détermine, au moyen de l'état du compteur mémorisé, un état du compteur auquel on s'attend, pour lequel, pour au moins l'un des signaux ( U, V, W ) de marque de segment, on doit s'attendre à une modification de son état binaire si, dans l'état débranché du dispositif ( 1, 4, 6 ), l'élément ( 10 ) ne s'est pas déplacé, dans lequel l'unité ( 3, 3', 3" ) d'exploitation compare l'état du compteur auquel on doit s'attendre à l'état du compteur réel, qui se produit lors de la modification suivante de l'état binaire de l'un des signaux ( U, V, W ) de marque de segment et, si la différence entre l'état du compteur auquel on doit s'attendre et l'état du compteur réel, dépasse une valeur limite, détecte une position ( ϕ ) déterminée d'une façon erronée.

3. Dispositif suivant l'une des revendications précédentes, **caractérisé en ce que** le dispositif ( 1, 4, 6 ) est constitué en dispositif ( 1 ) de commande et/ou en dispositif ( 4 ) de régulation pour la commande et/ou pour la régulation d'une machine dans la technique d'automatisation ou comme dispositif ( 6 ) de convertisseur de courant.

4. Dispositif suivant la revendication 3, **caractérisé en ce que** la machine de la technique d'automatisation est constituée en machine outil, en machine de production et/ou en robot.

5. Procédé de détection d'une position ( ϕ ) déterminée de manière erronée d'un élément ( 10 ) tournant d'un émetteur ( 8 ) incrémentiel, dans lequel il est lu par un dispositif ( 1, 4, 6 ) un premier et un deuxième signal ( A, B ) de marque de repérage de l'émetteur incrémentiel, dans lequel il est lu par le dispositif ( 1, 4, 6 ) un premier, un deuxième et un troisième signal ( U, V, W ) binaire de marque de segment de l'émetteur incrémentiel, dans lequel il est déterminé un état du compteur à partir du premier et du deuxième signal de marque de repérage, dans lequel l'état du compteur et les états binaires, associés à l'état du compteur, des signaux ( U, V, W ) de marque de segment sont mémorisés en continu et, après un débranchement et rebranchement du dispositif ( 1, 4, 6 ) il est contrôlé si l'état binaire présent s'est, pour au moins l'un des signaux ( U, V, W ) de marque de segment, écarté de l'état binaire mémorisé en dernier du signal de marque de segment concerné, dans lequel, si cela est le cas, il est détecté une position ( zip ) déterminée d'une façon erronée.
